**Europäisches Patentamt**

**European Patent Office**

**Office européen des brevets**

(19)

(11) Publication number : **0 061 214**
**B1**

(12)

# EUROPEAN PATENT SPECIFICATION

(45) Date of publication of patent specification :
07.11.84

(51) Int. Cl.³ : **B 62 D 33/04**

(21) Application number : **82200249.9**

(22) Date of filing : **26.02.82**

(54) **Closed self supporting body for a truck or trailer.**

(30) Priority : **20.03.81 NL 8101394**

(43) Date of publication of application :
**29.09.82 Bulletin 82/39**

(45) Publication of the grant of the patent :
**07.11.84 Bulletin 84/45**

(84) Designated contracting states :
**AT BE CH DE FR GB IT LI LU NL SE**

(56) References cited :
**DE-A- 2 329 531**
**FR-A- 2 245 504**
**FR-A- 2 372 339**
**FR-A- 2 428 201**
**FR-A- 2 465 627**
**US-A- 3 141 697**
**US-A- 3 353 863**
**US-A- 3 692 349**
**US-A- 3 969 868**

(73) Proprietor : **Heida, Alle**
**Steenwijkerweg 36**
**NL-8471 LC Wolvega (NL)**

(72) Inventor : **Heida, Alle**
**Steenwijkerweg 36**
**NL-8471 LC Wolvega (NL)**

(74) Representative : **van der Beek, George Frans, Ir. et al**
**Nederlandsch Octrooibureau P.O. Box 29720**
**NL-2502 LS The Hague (NL)**

## Description

The invention is related to a closed self supporting body for trucks or trailers comprising a number of mutually spaced cross beams, which are connected mutually by a steel longitudinal profile, a platform on said cross beams, rigid side walls, each being connected at the lower side to a flat metal strip on the longitudinal profile extending along the whole length of the side wall and a rigid fixed roof connected to the upper edges of the side walls.

Such bodies are in practice manufactured and sold during many years. Firstly the bottom frame is composed of a number of parallel cross beams that at the ends mutually are connected by longitudinal members. In this way a rectangular frame is obtained on which the platform can be fixed. Subsequently by riveting against each longitudinal member and along the whole length of it an aluminum profile is mounted which is provided with one or two upwardly directed flat strips. The lower part of each side wall then is connected by riveting to the inner side of the strip or between both strips.

Finely the fixed roof is connected to the upper edges of the side walls.

Although in this manner a strong body is obtained, the manufacturing of it is very labour intensive and thus expensive as result of the great number of rivets and moreover is expensive as result of the costs of the aluminum profiles.

The invention aims to provide a body in which these objections are avoided.

According to the invention this is obtained by the fact that each side wall comprises at least three layers preferably of ply-wood of which one or more middle layers has or have about the same thickness as the strip of steel, which layer or layers extends or extend to the upper edge of the strip, that the layer or layers at the inside of the middle layer or layers extends or extend to the upper side of the steel longitudinal profile and the layer or layers at the outside of the middle layer or layers extends or extend to the lower side of the longitudinal profile whereby the strip is glued between the layers present at the inside and the outside and forms one part with the longitudinal profile, which longitudinal profiles are welded to the head ends of the cross beams.

It is preferred that each longitudinal profile comprises a tube with rectangular cross section of which the height is about the same as the height of the cross beams and in that the flat strip lies in the same plane as the outer vertical wall of the tube while the inner vertical wall of the tube is welded to the head ends of the cross beams.

The invention is also related to a method for manufacturing a container, which method is characterized in that firstly the side walls are composed by glueing on each other at least three layers preferably of ply-wood, in which at the same time the steel strip, that forms one part with the steel longitudinal profile is taken up in the side wall by glueing, in that subsequently both side walls are erected parallel to each other and at the desired mutual distances, that the cross beams are positioned between the inner walls of the longitudinal profiles facing each other, and in that finally these inner walls are welded to the head ends of the cross beams.

As result of the mounting of each side wall out of a least three layers the possibility is obtained to glue the strip in the side wall as result of which all riveting is superfluous.

Also the joining together of the side walls with the cross beams thereby is simple so many labour hours are saved.

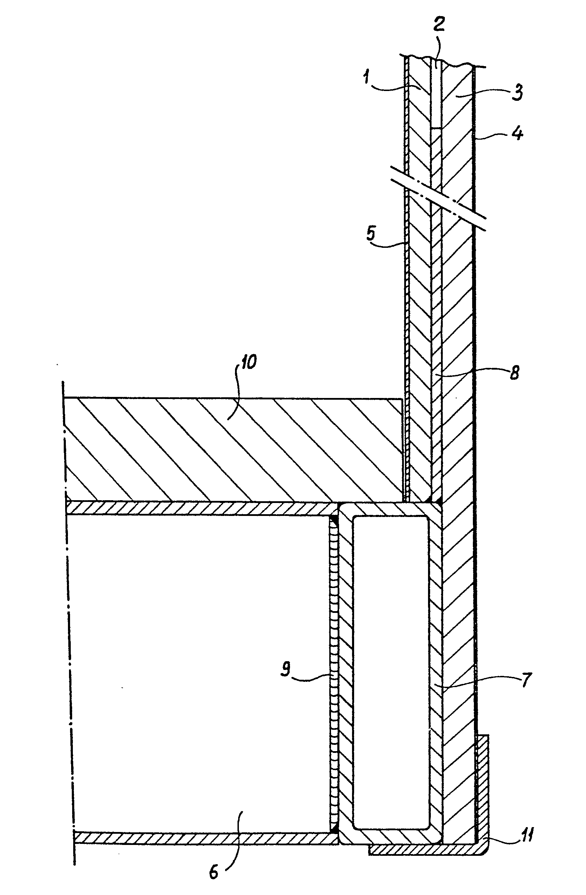

In the single drawing a cross section in shown of the corner between the side wall and the floor of the container according to the invention.

The side wall comprises three layers of ply-wood indicated by 1, 2 and 3. The middle layer 2 for instance has a thickness of 3 mm the inner layer 1 for instance has a thickness of 6 mm and the outer layer 3 for instance has a thickness of 9 mm.

Against the outer layer 3 still an aluminum covering layer 4 can be provided and also a plastic covering layer 5 against the inner layer 1.

The cross beams 6 are steel I-profiles that commercially can be obtained.

The longitudinal profile comprises a rectangular steel tube 7 that can be obtained on the market as also is the case with the steel flat strip 8 that is welded to the tube 7 in the extension of the right hand vertical wall.

In mounting the side wall the lower edges of the layers 1, 2 and 3 are not at the same height. At the same time with the glueing of the layers 1, 2 and 3 the strip 8 is glued so that a rigid side wall is obtained with the rectangular tube 7 along the lower side.

The two side walls are directed vertically parallel to each other and on the desired distance on the floor of the work shop and are kept by a support or such (not shown). Subsequently the cross beams 6 are put down at the correct places between them on the floor after which the head ends are welded to the inner walls of the tubes 7 as indicated by 9.

Subsequently the platform is glued to the beams 6 and the tubes 7. The not shown roof is connected in conventional manner to the side walls.

By this mounting all riveting is avoided.

With 11 still a covering strip of aluminum is indicated, which strip also is glued.

## Claims

1. Closed self supporting body for trucks or trailers comprising a number of mutually spaced cross beams (6), which are connected mutually at the ends by a steel longitudinal profile (7), a platform (10) on said cross beams (6), rigid side walls, each being connected at the lower side to a flat metal strip (8) on the longitudinal profile (7) extending along the whole length of the side wall and a rigid fixed roof connected to the upper edges of the side walls, characterized in that each side wall, comprises at least three layers (1, 2, 3) preferably of ply-wood of which one or more middle layers (2) has or have about the same total thickness as the strip of steel (8), which layer (2) or layers extends or extend to the upper edge of the strip (8), that the layer (1) or layers at the inside of the middle layer (2) or layers extends or extend to the upper side of the steel longitudinal profile (7) and the layer (3) or layers at the outside of the middle layer (2) or layers extends or extend to the lower side of the longitudinal profile (7) whereby the strip (8) is glued between the layers (1, 3) present at the inside and the outside and forms one part with the longitudinal profile (7), which longitudinal profiles (7) are welded to the head ends of the cross beams (6).

2. Body according to claim 1, characterized in that each longitudinal profile comprises a tube (7) with rectangular cross section of which the height is about the same as the height of the cross beams (6) and in that the flat strip (8) lies in the same plane as the outer vertical wall of the tube (7) while the inner vertical wall of the tube (7) is welded to the head ends of the cross beams (6).

3. Method for making a body according to claim 1 or 2, characterized in that firstly the side walls are composed by glueing on each other at least three layers (1, 2, 3) preferably of ply-wood, in which at the same time the steel strip (8), that forms one part with the steel longitudinal profile (7) is taken up in the side wall by glueing, in that subsequently both side walls are erected parallel to each other and at the desired mutual distances, in that the cross beams (6) are positioned between the inner walls of the longitudinal profiles (7) facing each other, and in that finally these inner walls are welded to the head ends of the cross beams (6).

## Ansprüche

1. Geschlossener selbsttragender Aufbau für Lastwagen oder Anhänger, mit einer Anzahl von zueinander im Abstand angeordneten Querträgern (6), die an den Enden miteinander durch ein Stahl-Längsprofil (7) verbunden sind, mit einer Plattform (10) auf den Querträgern (6), starren Seitenwänden, von denen jede an der unteren Seite mit einem flachen Metallstreifen (8) auf dem Längsprofil (7) verbunden ist, der sich über die gesamte Länge der Seitenwand erstreckt, und mit einem starren, festen Dach, das mit den oberen Rändern der Seitenwände verbunden ist, dadurch gekennzeichnet, daß jede Seitenwand wenigstens drei Schichten (1, 2, 3) vorzugsweise aus Sperrholz, umfaßt, von denen eine oder mehrere Mittelschichten (2) etwa die gleiche Gesamtdicke wie der Metallstreifen (8) hat bzw. haben, daß sich diese Schicht (2) oder die Schichten zum oberen Rand des Streifens (8) erstreckt oder erstrecken, daß die Schicht (1) oder die Schichten an der Innenseite der mittleren Schicht (2) oder der Schichten sich zur Oberseite des Stahl-Längsprofils (7) erstreckt oder erstrecken, und daß die Schicht (3) oder die Schichten an der Außenseite der mittleren Schicht (2) oder der Schichten sich zu der Unterseite des Längsprofils (7) erstreckt oder erstrecken, wodurch der Streifen (8) zwischen die Schichten (1, 3) geklebt ist, die sich an der Innenseite und der Außenseite befinden, und einen Teil mit dem Längsprofil (7) bildet, wobei diese Längsprofile (7) mit den Kopfenden der Querträger (6) verschweißt sind.

2. Aufbau nach Anspruch 1, dadurch gekennzeichnet, daß jedes Längsprofil ein Rohr (7) mit rechteckigem Querschnitt umfaßt, dessen Höhe etwa gleich der Höhe der Querträger (6) ist und daß der flache Streifen (8) in der gleichen Ebene liegt, wie die äußere vertikale Wand des Rohrs (7), während die innere vertikale Wand des Rohrs (7) mit den Kopfenden der Querträger (6) verschweißt ist.

3. Verfahren zur Herstellung eines Aufbaus nach Anspruch 1 oder 2, dadurch gekennzeichnet, daß zuerst die Seitenwände dadurch zusammengesetzt werden, daß wenigstens drei Schichten (1, 2, 3) vorzugsweise aus Sperrholz aufeinander geleimt werden, wobei gleichzeitig der Stahlstreifen (8), der einen Teil mit dem Stahl-Längsprofil (7) bildet, in der Seitenwand durch Verkleben aufgenommen wird, und daß danach beide Seitenwände parallel zueinander im gewünschten gegenseitigen Abstand aufgerichtet werden, daß ferner die Querträger (6) zwischen den einander zugewandten Innenwänden der Längsprofile (7) angeordnet werden, und daß schließlich diese Innenwände mit den Kopfenden der Querträger (6) verschweißt werden.

## Revendications

1. Une structure fermée auto-portante pour camions ou remorques qui comporte un certain nombre de traverses (6) espacées les unes des autres qui sont reliées entre elles, à leurs extrémités, par des profilés longitudinaux (7) en acier, une plate-forme (10) disposée sur lesdites traverses (6), des parois latérales rigides dont chacune est assemblée, à sa partie inférieure, à une bande métallique plate (8) portée par le profilé longitudinal (7), qui s'étend sur toute la longueur de la paroi latérale et un toit fixe rigide assemblé aux parois latérales, caractérisée en ce que chaque paroi latérale comprend au moins trois couches (1, 2, 3), de préférence de contre-plaqué, dont une ou plusieurs couches intermédiaires (2) a ou ont environ la même épaisseur totale que la bande d'acier (8), couche (2) ou couches qui s'étend ou s'étendent jusqu'au bord supérieur de la bande (8), en ce que la couche ou les couches (1) qui se trouve ou se trouvent à l'intérieur par rapport à la couche (2) ou aux couches intermédiaires s'étend ou s'étendent jusqu'au côté supérieur du profilé longitudinal (7) en acier et la couche (3) ou les couches qui se trouve ou se trouvent à l'extérieur par rapport à la couche (2) ou aux couches intermédiaires s'étend ou s'étendent jusqu'au côté inférieur du profilé longitudinal (7), la bande (8) étant collée entre les couches (1, 3) qui se trouvent situées à l'intérieur et à l'extérieur par rapport à elle et étant solidaire du profilé longitudinal (7), les profilés (3) longitudinaux (7) étant soudés aux extrémités de tête des traverses (6).

2. Structure selon la revendication 1, caractérisée en ce que chaque profilé longitudinal comprend un tube (7) ayant une section transversale rectangulaire dont la hauteur est environ la même que la hauteur des traverses (6) et en ce que la bande plate (8) s'étend dans le même plan que la paroi verticale extérieure du tube (7) tandis que la paroi verticale intérieure du tube (7) est soudée aux extrémités de tête des traverses (6).

3. Procédé pour la fabrication d'un conteneur selon la revendication 1 ou 2, caractérisé en ce qu'en premier lieu, on forme les parois latérales par collage entre elles d'au moins trois couches (1, 2, 3), de préférence de contre-plaqué, collage au cours duquel, en même temps, la bande d'acier (8), qui est solidaire du profilé longitudinal (7) en acier, est incorporée à la paroi latérale par collage, en ce qu'ensuite, on dresse les deux parois latérales parallèlement entre elles et aux distances l'une de l'autre désirées, en ce qu'on positionne les traverses (6) entre les parois intérieures des profilés longitudinaux (7) qui font face l'une à l'autre et en ce que, finalement, on soude les parois intérieures aux extrémités de tête des traverses (6).